# EUROPEAN PATENT APPLICATION

(11) **EP 4 717 961 A1**
(43) Date of publication of application: **01.04.2026**
(21) Application number: 24203169.8
(22) Date of filing: 27.09.2024
(51) Int. Cl.: F16L 5/02, F16L 5/04, F16L 5/10, F16L 5/14, H02G 3/04, H02G 3/22

(54) **LEAD-THROUGH ELEMENT FOR THE INSTALLATION OF CABLES AND PIPES**

(71) Applicant: Hilti Aktiengesellschaft, 9494 Schaan (LI)
(72) Inventor: Tecson, Joshua, Bedford, 76021 (US)
(74) Representative: Hilti Aktiengesellschaft Corporate Intellectual Property

(57) **Abstract**

The present invention relates to a lead-through element for the installation of penetrants (11) through a floor (100) or a ceiling or a wall of a building, comprising a hollow cylindrical sleeve part (1) which length is adapted onto the thickness of the floor, the ceiling or the wall, wherein a modular structure wherein a flange part (2) for connecting the lead-through element onto a floor/wall/ceiling surface is detachably attached at one front end (4) the sleeve part (1) and a vented part (5) for accommodating a fire protection inlay (6) is detachably attached at one back end (3) of the sleeve part (1).

## Description

The present invention relates to a lead-through element for the installation of penetrants through a floor, a wall or a ceiling of a building, comprising a hollow cylindrical sleeve part which length is adapted onto the thickness of the floor, the wall or the ceiling.

The field of application of the invention extends primarily to the installation technology of buildings, in particular building witlh floors made of concrete. In order to install technical building equipment, such as a heating system, a power supply network or a communication network, within a building, connecting electrical and/or fluid-carrying lines or pipes often have to be fed through openings in floors, in walls or ceilings of the building.

In contrast to this, however, the solution according to the invention is not suitable for fire-conducting lines or pipes, such as flue gas pipes of fireplaces. Relevant fire protection regulations apply here, which require special, standardized lead-through elements made of special non-combustible materials, usually with multiple interconnections.

### State of the art

The document DE 24 11 538 A1 describes a wall lead-through arrangement for cables, pipes and the like, which is installed in conjunction with a formwork for concrete casting. After removal of the formwork and removal of flanges connecting both sides, a thin-walled tube remains in the concrete wall as a hollow cylindrical sleeve section for the passage of cables, for example.

With that application it might not be possible to create such a material bond by moulding around the floor/ceiling/wall material.

For the applications according to the invention, floor/ceiling/wall guide elements are generally known which are designed as hollow cylindrical sleeves which are inserted into prefabricated openings of floors/walls/ceilings and usually glued into them. These sleeves can be made of a plastic material or a metal sheet and are usually cut to length according to the thickness of the floor, the ceiling or the wall. This requires a total of several individual assembly steps, which together take up a correspondingly long assembly time. In addition, it is often not possible to achieve a sealed, homogeneous transition between the floor/ceiling/wall area and the passage area.

It is therefore an object of the present invention to create a lead-through element for the installation of cables and pipes through, in particular, a concrete floor or ceiling or wall of a building, which is easy to manufacture and ensures secure separation of the penetrants.

### Disclosure of the invention

The problem is solved on the basis of a lead-through element according to the preamble of claim 1 in conjunction with its characterizing features. The following dependent claims describe advantageous further embodiments of the invention.

The invention includes the technical teaching that a lead-through element has a modular structure, wherein a flange part for connecting the lead-through element onto a floor/wall/ceiling surface is detachably attached at one front end of the sleeve part and a vented part for accommodating a fire protection inlay is detachably attached at one back end of the sleeve part. The lead-through element can be used e.g. for concrete and timber applications.

Due to the separated frontal flange part in combination with the also separated backend vented part which are both detachably attached onto the intermediate sleeve part, a modular structure is provided in which the length of the intermediate sleeve part can be chosen depending on the thickness of the floor, the wall or the ceiling of the building. The modular structure according to the present invention reduce the number of single parts which are needed in the manufacturing process. This ensures a streamlined portfolio of lead-through elements of different sizes with fewer single parts and mounting steps.

Preferably, at least the said sleeve part, the flange part as well as the vented part which are the main components of the modular lead-through element according to the present invention are injection-moulded made of plastics material. Thus, no welding steps of metal sheet material or secondary coating operations are needed.

According to a preferred embodiment of the flange part, it consists of a radial flange section and an axial tube section. The radial flange section is preferably provided with circumferential arranged holes for attaching the lead-through element onto a floor/wall/ceiling surface. In contrast, the axial tube section is preferably screwed into the cylindrical sleeve part in order to ensure the detachably connection according to the present invention.

According to a further optional aspect of the invention, an additional ring-disk-shaped outer gasket is provided between the flange section of the flange part and the floor/wall/ceiling surface in order to ensure a gastight connection.

According to a further aspect improving the invention, a front opening of the flange part is provided with a screwed-in lid part with at least two through-holes for receiving corresponding penetrants, preferably electrical/fluid-carrying lines or pipes. The different through-holes guide the corresponding penetrants separated from one to another.

According to another optional aspect of the invention, the lid part comprises a preferably coaxial extending indicator pin for indicating the location of the central axis of the mounted lead-through element.

According to the preferred embodiment, the vented part arranged on the backend of the sleeve part comprises a cylindrical sleeve sub-part for accommodating a hollow cylindrical fire protection inlay. The fire protection inlay is preferably made of fibre-reinforced CP64W-material, which is already known for similar fire protection purposes.

Preferably, the cylindrical sleeve sub-part additionally comprises a plurality of circumferential arranged vent openings which allows the fire protection inlay to expand towards the inner and outer diameter of the lead-through element in order to provide a high fire protection performance. The specific vented part allows the fire protection inlay to seal inner and outer gaps between adjacent parts and the flloor/wall/ceiling respectively.

According to a further aspect improving the invention, the screw connection between the above-mentioned parts of the lead-through element according to the invention, namely between the tube section of the flange part and the cylindrical sleeve part and/or between the vent part and the cylindrical sleeve part and/or between the lid part and the flange part is preferably provided as a bayonet screw connection in order to ensure an easy-to-install detachably parts connection.

In view of the modularity of the technical solution according to the present invention, the sleeve part is preferably an element of a set of at least two different lengths, from which a suitable sleeve part is selectable depending on the thickness of the floor/wall/ceiling.

### Detailed description of the drawing

Further measures improving the invention are described in more detail below together with the description of a preferred embodiment of the invention with reference to the drawings:
- Fig. 1: is a perspective explosion view of the lead-through element according to the invention,
- Fig. 2: is a perspective view of two lead-through elements according to the modular structure of the present invention, and
- Fig. 3: is an exemplary lead-through element according to the invention installed into a floor breakthrough in an upright position.

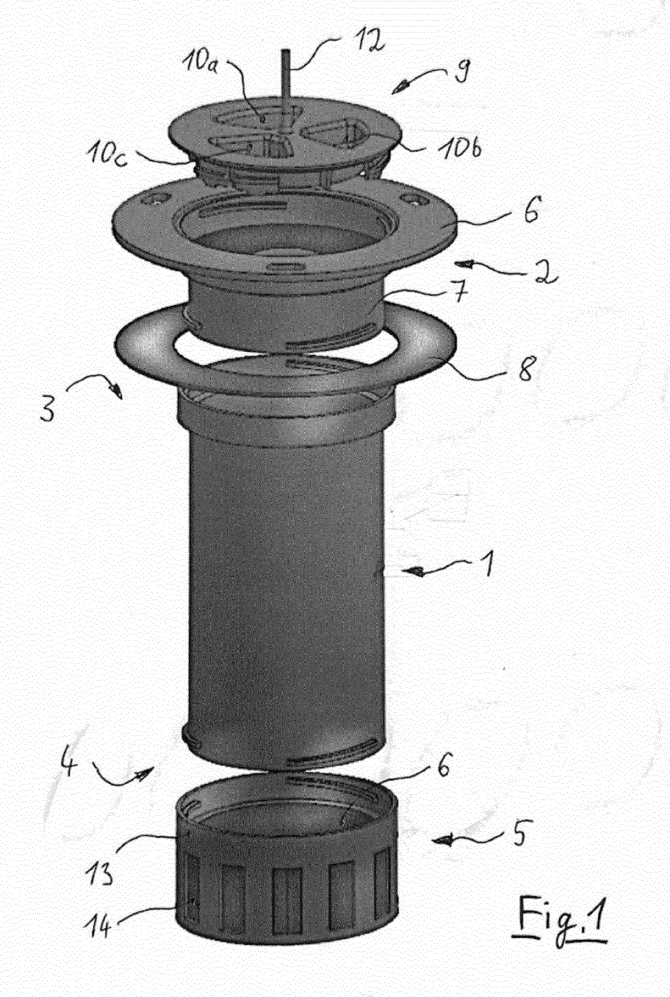

According to Fig. 1, the exemplary lead-through element consists of a flange part 2 for connecting it onto a - not shown - floor/wall/ceiling surface. The flange part 2 is detachably attached at the front end 3 of the sleeve part 1. At the back end 4 of the sleeve part 1, a vented part 5 is also detachably attached. The vented part 5 accommodates a fire protection inlay 6.

The flange part 2 consists of a radial flange section 6 and an axial tube section 7, wherein the axial tube section 7 is screwed into the cylindrical sleeve part 1 by a bayonet connection. An additional ring-disk-shaped outer gasket 8 is arranged around the axial tube section 7 of the flange part 2.

The front opening of the flange part 2 is provided with a screwed-in lid part 9. The lid part 9 comprises three through-holes 10a - 10c for receiving corresponding - not shown - penetrants. Furthermore, the lid part 9 comprises a coaxial extending indicator pin 12 for indicating the location of the lead-through element in its mounting state.

The vented part 5 comprises a cylindrical sleeve sub-part 13 for accommodating the protection inlay 6, which is hollow cylindrical shaped. The cylindrical sleeve sub-part 13 comprises a plurality of circumferential arranged vent openings 14 (exemplary) which allows the fire protection inlay 6 to expand also towards the outer diameter of the lead-through element. The vented part 5 is also screwed into the cylindrical sleeve part 1 by a bayonet screw connection.

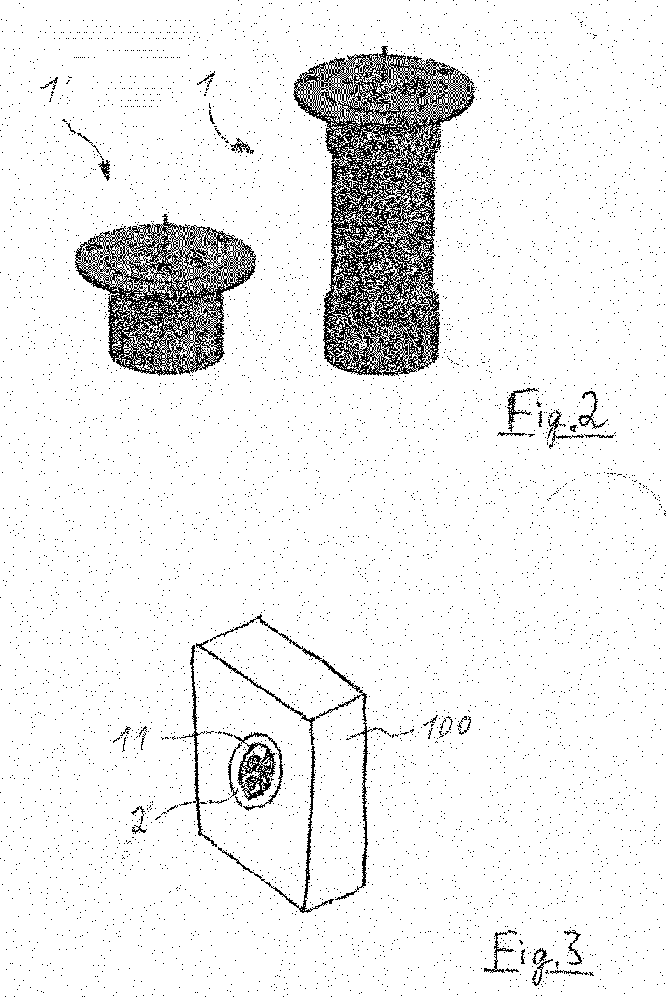

According to Fig. 2, sleeve parts 1 and 1' are elements of a set of sleeve parts of two different lengths. Depending on the thickness of the floor/ceiling/wall, a suitable sleeve part 1 or 1' is selectable from the set of different sleeve parts.

According to Fig. 3, the lead-through element according to the present invention is mounted on a concrete floor100. The frontal flange part 2 serves for a mechanical connection to the floor 100. Penetrants 11 in form of pipes run through the lead-through element according to the present invention.

The invention is not limited to the preferred embodiment example described above. Rather, variations thereof are also conceivable, which are also covered by the scope of protection of the following claims. For example, it is also possible to provide another lid part which fits to the cross-section of specific penetrants.

### Reference signs

- 1: sleeve part
- 2: flange part
- 3: backend
- 4: front end
- 5: vented part
- 6: flange section
- 7: tube section
- 8: gasket
- 9: lid part
- 10: through-hole
- 11: penetrant
- 12: indicator pin
- 13: sleeve sub-part
- 14: opening

- 100: floor

## Claims

1. Lead-through element for the installation of penetrants (11) through a floor (100) or a ceiling or a wall of a building, comprising a hollow cylindrical sleeve part (1) which length is adapted onto the thickness of the floor/ceiling/wall,
**characterized by** a modular structure wherein a flange part (2) for connecting the lead-through element onto a floor/wall/ceiling surface is detachably attached at one front end (4) the sleeve part (1) and a vented part (5) for accommodating a fire protection inlay (6) is detachably attached at one back end (3) of the sleeve part (1).

2. Lead-through element according to claim 1,
**characterized in that** at least the sleeve part (1), the flange part (2) and the vented part (5) are injection molded parts made of plastics material.

3. Lead-through element according to claim 1 or 2,
**characterized in that** the flange part (2) consists of a radial flange section (6) and an axial tube section (7).

4. Lead-through element according to one of claims 1 to 3,
**characterized in that** a front opening of the flange part (2) is provided with a screwed-in lid part (9) with at least two through holes (10a - 10c) for receiving corresponding penetrants (11).

5. Lead-through element according to claim 4,
**characterized in that** the lid part (9) comprises a coaxial extending indicator pin (12) for indicating the location of the central axis of the mounted lead-through element.

6. Lead-through element according to one of claims 3 to 5,
**characterized in that** the axial tube section (7) of the flange part (2) is screwed into the cylindrical sleeve part (1).

7. Lead-through element according to one of the preceding claims,
**characterized in that** a ring-disk-shaped outer gasket (8) is arranged between the flange section (6) and the floor/wall/ceiling surface.

8. Lead-through element according to one of the preceding claims,
**characterized in that** the vented part (5) comprises a cylindrical sleeve sub-part (13) for accommodating a hollow cylindrical fire protection inlay (6).

9. Lead-through element according to claim 8,
**characterized in that** the cylindrical sleeve sub-part (13) comprises a plurality of circumferential arranged vent openings (14) which allows the fire protection inlay (6) to expand towards the inner and outer diameter of the lead-through element.

10. Lead-through element according to one of the preceding claims,
**characterized in that** the vented part (5) is screwed into the cylindrical sleeve part (1).

11. Lead-through element according to at least one of the preceding claims,
**characterized in that** the screw connection
- between the tube section (7) and the cylindrical sleeve part (1; 1'); and/or
- between the vented part (5) and cylindrical sleeve part (1; 1'); and/or
- between the lid part (9) and flange part (2)
is provided as a bayonet screw connection.

12. Lead-through element according to at least one of the preceding claims,
**characterized in that** the sleeve part (1; 1') is an element of a set of sleeve parts of at least two different lengths, from which a suitable sleeve part (1; 1') is selectable depending on the thickness of the floor/wall/ceiling.
